# NOUVEAU FASCICULE DE BREVET EUROPEEN

(11) **EP 1 271 738 B2**
(45) Date de publication et mention de la décision concernant l'opposition: **19.11.2008**
(45) Mention de la délivrance du brevet: 19.05.2004
(21) Numéro de dépôt: 02354049.5
(22) Date de dépôt: 22.03.2002
(51) Int. Cl.: H02H 1/06

(54) **Déclencheur électronique comportant un condensateur d'alimentation d'une bobine de déclenchement**
Elektronische Auslösevorrichtung mit einem Kondensator für die Stromversorgung einer Auslösespule
Electronic tripping device with capacitor for supplying power to a tripping coil

(30) Priorité: 19.06.2001 FR 0108021
(43) Date de publication de la demande: 02.01.2003
(73) Titulaire: SCHNEIDER ELECTRIC INDUSTRIES SAS, 92500 Rueil-Malmaison (FR)
(72) Inventeur: Houbre, Pascal, c/o Schneider Elec. Indust. S.A., 38050 Grenoble Cédex 09 (FR)
(74) Mandataire: Tripodi, Paul

(56) Documents cités:
- DE-A- 3 223 687
- DE-A- 3 331 823
- DE-A- 19 640 345
- DE-A- 19 954 038
- US-A- 4 567 540
- US-A- 5 117 325

## Description

### Domaine technique de l'invention

L'invention concerne un déclencheur électronique comportant des moyens de mesure du courant connectés à un circuit électronique de traitement, destiné à réaliser des fonctions de protection et comparant le courant mesuré à au moins un seuil de déclenchement, et à un circuit d'alimentation comportant un condensateur d'alimentation et des moyens de régulation de la tension aux bornes du condensateur en fonction d'une tension de référence prédéterminée.

### État de la technique

Dans les déclencheurs connus, la bobine de déclenchement est généralement alimentée par un condensateur d'alimentation d'un circuit d'alimentation. Dans les déclencheurs à propre courant, le condensateur d'alimentation est chargé par des capteurs de courant associés aux conducteurs d'un réseau électrique à protéger. Le circuit d'alimentation est généralement du type alimentation à découpage, permettant de réguler la tension aux bornes du condensateur d'alimentation.

Le document US-A-4 567 540 décrit un circuit d'alimentation comprenant un condensateur d'alimentation et des moyens de régulation de la tension aux bornes du condensateur en fonction d'une tension de référence, pour un déclencheur électronique comportant des moyens de mesure du courant connectés à un circuit électronique de traitement et destiné à assurer des fonctions de protection.

Un déclencheur comportant un circuit d'alimentation est décrit dans le document DE 3331823.

Dans les déclencheurs actuels, une première tension d'alimentation, de l'ordre de 18V est généralement nécessaire aux bornes du condensateur d'alimentation pour assurer un déclenchement fiable par la bobine de déclenchement. Une seconde tension d'alimentation, inférieure, de l'ordre de 10V par exemple, suffisante pour l'alimentation des divers circuits électroniques du déclencheur, est dérivée de la tension aux bornes du condensateur de déclenchement.

La durée de vie d'un condensateur étant déterminée par l'écart entre la tension maximale acceptable par le condensateur (tension nominale du condensateur) et la tension réelle d'utilisation, la fiabilité du condensateur de déclenchement implique l'utilisation de condensateurs de taille suffisante.

### Objet de l'invention

L'invention a pour but un déclencheur permettant de maintenir ou d'augmenter la fiabilité du condensateur de déclenchement, tout en réduisant la taille et le coût de celui-ci.

Le déclencheur électronique selon l'invention est défini à la revendication 1.

### Description sommaire des dessins

D'autres avantages et caractéristiques ressortiront plus clairement de la description qui va suivre d'un mode particulier de réalisation de l'invention donné à titre d'exemple non limitatif, et représenté aux dessins annexés, dans lesquels :
La figure 1 représente, sous forme schématique, un déclencheur électronique selon l'art antérieur.
La figure 2 représente un circuit d'alimentation d'un déclencheur selon l'art antérieur.
La figure 3 représente un mode de réalisation particulier d'un déclencheur selon l'invention.
Les figures 4a et 4b illustrent respectivement les variations, en fonction du temps, de la tension aux bornes du condensateur d'alimentation et d'un signal d'alimentation des circuits électroniques d'un déclencheur selon la figure 3.
La figure 5 représente un mode particulier de réalisation d'un organigramme de fonctionnement d'un circuit d'alimentation d'un déclencheur selon la figure 3.

### Description d'un mode particulier de réalisation

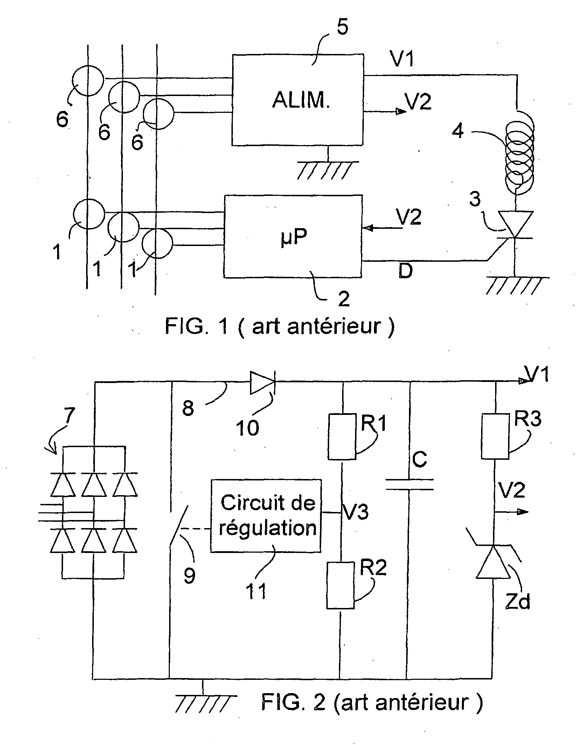

Un déclencheur électronique selon l'art antérieur est illustré à la figure 1. Seuls les éléments nécessaires à la compréhension de l'invention ont été représentés sur la figure. Des capteurs de courant 1, associés à des conducteurs d'un réseau électrique à protéger, fournissent à un circuit électronique de traitement 2 des signaux représentatifs des courants circulant dans les conducteurs. Le circuit électronique de traitement 2, de préférence à microprocesseur et destiné à réaliser des fonctions de protection, compare les courants mesurés à au moins un seuil de déclenchement et fournit un signal de déclenchement D en cas de défaut, par exemple en cas de surcharge ou de court-circuit. Le signal de déclenchement D est appliqué à une électrode de contrôle d'un interrupteur électronique 3, par exemple constitué par un thyristor. La fermeture de l'interrupteur électronique 3 par un signal de déclenchement D provoque l'excitation d'une bobine de déclenchement 4, connectée en série avec l'interrupteur électronique aux bornes d'une première tension d'alimentation V₁.

La première tension d'alimentation V₁ est fournie par un circuit d'alimentation 5. Dans les déclencheurs à propre courant, le circuit d'alimentation 5 est alimenté par des capteurs de courant associés aux conducteurs du réseau électrique à protéger. Les capteurs de courant connectés au circuit d'alimentation peuvent être les capteurs de courant 1 ou, comme représenté à la figure 1, des capteurs de courant 6 distincts des précédents. Dans ce dernier cas, les capteurs de courant 1 sont, de préférence, des capteurs air, par exemple constitués par des tores de Rogowski, tandis que les capteurs de courant 6 sont, de préférence, des capteurs à noyau fer.

Le circuit d'alimentation 5 fournit également une seconde tension d'alimentation V₂, inférieure à la première, suffisante pour l'alimentation des divers circuits électroniques du déclencheur.

Classiquement le circuit d'alimentation 5 est du type alimentation à découpage, permettant de réguler la tension aux bornes du condensateur d'alimentation. Dans le mode de réalisation particulier représenté à la figure 2, les capteurs de courant, 1 ou 6, sont connectés à un circuit de redressement 7, de préférence du type redresseur à double alternance, comportant deux bornes de sortie, dont l'une est connectée à la masse et l'autre à un conducteur 8. Un interrupteur électronique 9, faisant fonction de hacheur, est connecté en parallèle sur les bornes de sortie du circuit de redressement. Une première borne de sortie du circuit d'alimentation 5, fournissant la première tension d'alimentation V₁, est connectée au conducteur 8 par l'intermédiaire d'une diode 10, connectée de manière à être conductrice lorsque la tension à la sortie du circuit de redressement 7 est supérieure à V₁ et bloquée dans le cas contraire. Un condensateur C est connecté, en parallèle avec un diviseur de tension, entre la première borne de sortie du circuit d'alimentation 5 et la masse. Le diviseur de tension est un diviseur résistif constitué par des première et seconde résistances R₁ et R₂ connectées en série. Le point milieu du diviseur résistif est connecté à une entrée d'un circuit de régulation 11, qui contrôle l'interrupteur électronique 9. Une troisième résistance R₃ est connectée, en série avec une diode Zéner Zd, en parallèle sur le condensateur C, le point commun à la troisième résistance R₃ et la diode Zéner Zd constituant une seconde borne de sortie du circuit d'alimentation 5, fournissant la seconde tension d'alimentation V₂.

La tension V₃ au point milieu du diviseur résistif est représentative de la tension V₁ aux bornes du condensateur. Tant que la tension V₃ est inférieure à une tension de référence prédéterminée, le circuit de régulation 11 maintient l'interrupteur électronique 9 en position ouverte (blocage dans le cas d'un transistor). Le condensateur C se charge donc, par l'intermédiaire du circuit de redressement 7 et de la diode 10, à partir des transformateurs de courant. Dès que la tension V₃ atteint la tension de référence, le circuit de régulation 11 ferme l'interrupteur électronique 9 (conduction dans le cas d'un transistor), court-circuitant ainsi la sortie du circuit de redressement. La diode 10 se bloque alors, empêchant la poursuite de la charge du condensateur C. La première tension d'alimentation V₁ est ainsi régulée à la valeur de la tension de référence prédéterminée. La seconde tension d'alimentation V₂ est alors obtenue aux bornes de la diode Zéner Zd.

Dans les déclencheurs connus, la tension de référence est choisie de manière à assurer à tout instant un déclenchement sûr de la bobine de déclenchement en cas de défaut. À titre d'exemple, si la tension nécessaire pour un déclenchement fiable de la bobine de déclenchement 4 est de l'ordre de 18V, la tension de référence est fixée à une valeur de 19V.

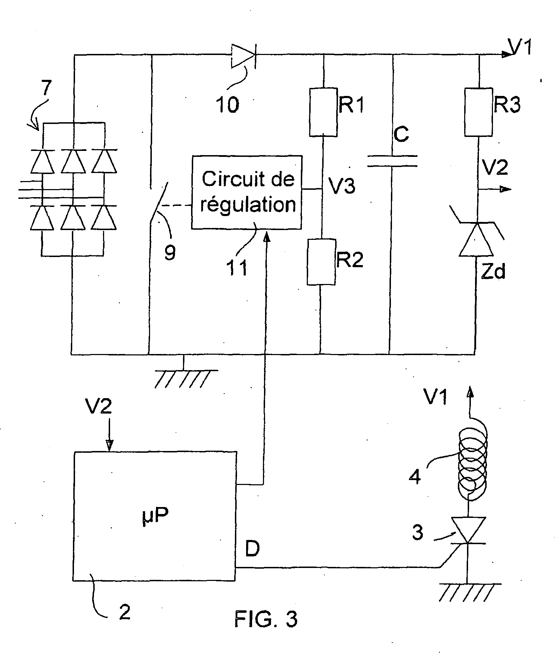

Le déclencheur selon l'invention représenté à la figure 3 se distingue de celui décrit ci-dessus par le fait que le circuit de régulation 11 comporte une entrée supplémentaire connectée à une sortie supplémentaire du circuit électronique de traitement 2 du déclencheur. Le circuit électronique de traitement 2 provoque une modification de la tension de référence du circuit de régulation 11 de manière à ce qu'elle prenne une première valeur prédéterminée pendant une période prédéterminée, lors d'une mise sous tension du déclencheur ou lorsque le courant mesuré I est égal ou supérieur à un seuil prédéterminé Is, inférieur au seuil de déclenchement, et à une seconde valeur prédéterminée, inférieure à la première, après ladite période prédéterminée.

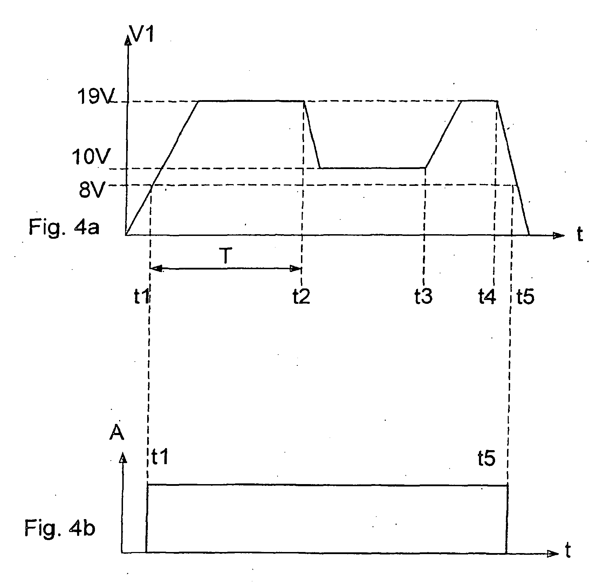

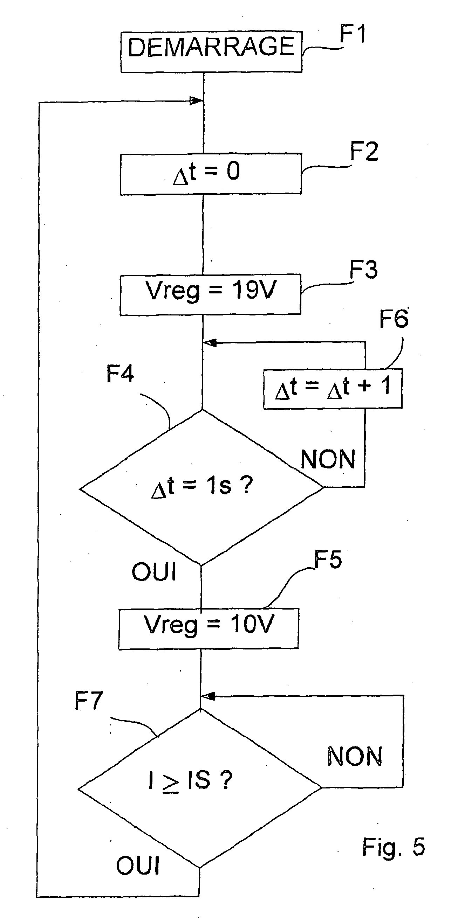

Le fonctionnement d'un déclencheur selon l'invention va être explicité plus en détail en référence aux figures 4a, 4b et 5.

Au démarrage, c'est-à-dire lors de la mise sous tension du déclencheur, la tension V₁ aux bornes du condensateur C est nulle. L'interrupteur électronique 9 étant ouvert, le condensateur commence à se charger. La tension V₁ augmente. À un instant t₁, elle atteint une valeur suffisante, par exemple 8V sur la figure 4A, pour alimenter les circuits électroniques du déclencheur et plus particulièrement le circuit électronique de traitement 2. Un signal d'alimentation A (figure 4b), jusqu'ici à 0, prend alors la valeur 1, initialisant une phase F1 de démarrage (figure 5) du microprocesseur du circuit électronique de traitement. Celui-ci met alors à zéro, dans une phase F2, une grandeur Δt, puis fixe, dans une phase F3, la valeur de la tension de référence Vref à une première valeur. Dans le mode de réalisation particulier représenté, cette première valeur de la tension de référence est de 19V. Sous le contrôle du circuit électronique de traitement 2, le circuit de régulation 11 utilise cette première valeur de la tension de référence pendant une période prédéterminée T, par exemple comprise entre 10 millisecondes et 100 millisecondes.

Le microprocesseur vérifie ensuite, dans une étape F4, si la période T est écoulée (Δt = 1 s ?). Si c'est le cas (sortie Oui de F4), il modifie alors, dans une étape F5, la valeur de la tension de référence Vref, qui prend une seconde valeur, inférieure à la première. Dans le mode de réalisation particulier représenté, cette seconde valeur de la tension de référence est de 10V. Sous le contrôle du circuit électronique de traitement 2, le circuit de régulation 11 utilise cette seconde valeur de la tension de référence à partir d'un instant t₂ (t₂ = t₁ +T) Le condensateur C se décharge alors jusqu'à ce que la tension à ses bornes prenne la seconde valeur de référence. Cette valeur est choisie de manière à être suffisante pour assurer une alimentation fiable des circuits électroniques du déclencheur, c'est-à-dire qu'elle doit être supérieure à 8V dans le mode de réalisation particulier représenté, tout en étant inférieure à la tension nécessaire pour assurer une activation fiable de la bobine de déclenchement. Si la période T n'est pas écoulée (sortie Non de F4), le microprocesseur passe à une étape F6, dans laquelle il incrémente la grandeur Δt (Δt = Δt+1), avant de se boucler sur l'étape F4.

Après l'étape F5, où la tension de référence est passée à la seconde valeur, la plus basse, le microprocesseur surveille (étape F7) le dépassement éventuel d'un seuil Is prédéterminé, inférieur au seuil de déclenchement, par le courant I mesuré (I ≥ Is ?). Tant que le courant mesuré reste inférieur à ce seuil (sortie Non de F7), la tension de référence reste inchangée et le microprocesseur continue sa surveillance de l'évolution du courant en se bouclant sur l'étape F7.

Si, à un instant t₃, le courant mesuré atteint ou dépasse le seuil Is (sortie Oui de F7), le microprocesseur se boucle sur l'étape F2. La tension de référence Vref reprend alors la première valeur, la plus élevée, et le condensateur C se recharge jusqu'à atteindre cette valeur. Le dépassement du seuil Is par le courant indique que celui-ci a dépassé sa valeur normale et constitue un indice de la possibilité de l'imminence de la détection d'un défaut devant conduire à un déclenchement. À titre d'exemple, In étant le courant nominal du déclencheur, le seuil Is peut être égal à 2 In. Si, pendant la période T, suivant l'instant t₃, le circuit électronique de traitement 2 ne détecte pas de défaut, la tension de référence repasse à sa seconde valeur après cette période. Par contre, si un défaut est effectivement détecté pendant cette période, un signal de déclenchement D est alors émis, à l'instant t₄ sur la figure 4b. La bobine de déclenchement 4, correctement alimentée par le condensateur C, qui vient d'être rechargé, provoque alors l'interruption du courant dans le réseau à protéger. Le circuit d'alimentation 5 n'est alors plus alimenté par les capteurs de courant et le condensateur C se décharge. À un instant t₅, la tension aux bornes du condensateur devient insuffisante pour alimenter correctement les circuits électroniques du déclencheur (A = 0). Classiquement, le microprocesseur prend des mesures de sauvegarde de certaines données pendant la période t₄-t₅ suivant le déclenchement.

Dans le mode de réalisation de la figure 5, les valeurs spécifiques (19V et 10V) de la tension de référence sont fixées pendant les étapes F3 et F5, ces valeurs étant alors transmises au circuit de régulation 11. Dans une variante de réalisation, les deux valeurs pouvant être prises par la tension de référence Vref sont prédéterminées à l'intérieur du circuit de régulation et le microprocesseur ne transmet au circuit de régulation qu'un signal binaire représentatif de la valeur à utiliser.

L'invention permet ainsi de réduire la taille, et donc le coût, du condensateur C d'alimentation de la bobine de déclenchement 4, tout en assurant un fonctionnement fiable de celle-ci en cas de défaut. Un déclenchement étant un événement relativement rare, le condensateur n'est à pleine charge que pendant de courtes périodes, de 1s par exemple, pendant lesquelles un défaut est susceptible de se produire, en l'occurrence à la mise sous tension du déclencheur et lorsque le courant mesuré atteint un seuil Is prédéterminé. À titre d'exemple, un condensateur de 22µF avec une tension maximale de 35V, peut être remplacé par un condensateur de 22µF avec une tension maximale de 25V. L'écart entre la tension maximale du condensateur et la tension d'utilisation passant de 35V-19V, soit 16V, à 25V-10V, soit 15V, la durée de vie et la fiabilité du condensateur du condensateur sont sensiblement maintenues, malgré une diminution appréciable de sa taille et de son coût. Inversement, à taille constante du condensateur, on peut obtenir une forte augmentation de la durée de vie et donc de la fiabilité du condensateur.

L'invention n'est pas limitée aux modes particuliers de réalisation décrits ci-dessus. En particulier, elle ne se limite pas à une alimentation à découpage du type abaisseur de tension mais s'applique également, de manière analogue, dans le cas d'une alimentation à découpage du type élévateur de tension.

## Revendications

1. Déclencheur électronique comportant des moyens (1, 6) de mesure du courant connectés à un circuit électronique de traitement (2), destiné à réaliser des fonctions de protection et comparant le courant mesuré à au moins un seuil de déclenchement, et à un circuit d'alimentation (5) comportant un condensateur d'alimentation (C) et des moyens (11) de régulation de la tension aux bornes du condensateur en fonction d'une tension de référence (Vref) prédéterminée, déclencheur **caractérisé en ce que** le circuit électronique de traitement (2) comporte des moyens de comparaison du courant mesuré (I) à un seuil prédéterminé (Is), inférieur au seuil de déclenchement, le déclencheur comportant des moyens pour fixer la tension de référence (Vref) des moyens (11) de régulation à une première valeur prédéterminée pendant une période prédéterminée (T), lors d'une mise sous tension du déclencheur ainsi que lorsque le courant mesuré (I) est égal ou supérieur au seuil prédéterminé (Is), et à une seconde valeur prédéterminée, inférieure à la première, après ladite période prédéterminée, ladite seconde valeur étant suffisante pour l'alimentation du circuit électronique de traitement (2) par le condensateur d'alimentation (C).

2. Déclencheur selon la revendication 1, **caractérisé en ce que** la seconde valeur de la tension de référence (Vref) est inférieure à la tension nécessaire pour activer une bobine de déclenchement (4) du déclencheur.

3. Déclencheur selon l'une des revendications 1 et 2, **caractérisé en ce que** le circuit de régulation (11) comporte une entrée connectée à une sortie du circuit électronique de traitement (2).

4. Déclencheur selon l'une quelconque des revendications 1 à 3, **caractérisé en ce que** la période prédéterminée est comprise entre 10 millisecondes et 100 millisecondes.

5. Déclencheur selon l'une quelconque des revendications 1 à 4, **caractérisé en ce que** le circuit d'alimentation (5) est une alimentation à découpage.

## Claims

1. An electronic trip device comprising current measuring means (1, 6) connected to an electronic processing circuit (2) designed to perform protection functions and comparing the measured current with at least one tripping threshold, and to a power supply circuit (5) comprising a supply capacitor (C) and means (11) for regulating the voltage at the terminals of the capacitor according to a preset reference voltage (Vref), a trip device **characterized in that** the electronic processing circuit (2) comprises means for comparing the measured current (I) with a preset threshold (Is), lower than the tripping threshold, the trip device comprising means for setting the reference voltage (Vref) of the means (11) for regulating to a first preset value during a preset period (T), when power-on of the trip device is performed and when the measured current (I) is equal to or greater than the preset threshold (Is), and to a second preset value, lower than the first value, after said preset period, said second value being sufficient for power supply of the electronic processing circuit (2) by the supply capacitor (C).

2. Trip device according to claim 1, **characterized in that** the second value of the reference voltage (Vref) is lower than the voltage necessary to activate a trip coil (4) of the trip device.

3. Trip device according to one of the claims 1 and 2, **characterized in that** the regulating circuit (11) comprises an input connected to an output of the electronic processing circuit (2).

4. The trip device according to any one of the claims 1 to 3, **characterized in that** the preset period is comprised between 10 milliseconds and 100 milliseconds.

5. The trip device according to any one of the claims 1 to 4, **characterized in that** the power supply circuit (5) is a switching power supply.

## Patentansprüche

1. Elektronischer Auslöser mit Strommeßmitteln (1, 6), die an eine elektronische Verarbeitungsschaltung (2) zur Gewährleistung von Schutzfunktionen und zum Vergleich des gemessenen Stroms mit mindestens einem Auslöseschwellwert sowie an eine Stromversorgungsschaltung (5) angeschlossen sind, die einen Stromversorgungskondensator (C) und Regelungsmittel (11) zur Regelung der Spannung an den Klemmen des Kondensators in Abhängigkeit von einer festgelegten Bezugsspannung (Vref) umfaßt, welcher Auslöser **dadurch gekennzeichnet ist, daß** die elektronische Verarbeitungsschaltung (2) Vergleichsmittel zum Vergleich des gemessenen Stroms (I) mit einem festgelegten, unter dem Auslöseschwellwert liegenden Schwellwert (Is) umfaßt, und der Auslöser Mittel umfaßt, um die Bezugsspannung (Vref) der Regelungsmittel (11) während einer festgelegten Zeitdauer (T), bei Anlegen der Spannung an den Auslöser und Messung eines Stroms (I) größer oder gleich dem festgelegten Schwellwert (Is), auf einen ersten festgelegten Wert sowie nach Ablauf der genannten festgelegten Zeitdauer auf einen, im Vergleich zum ersten Schwellwert niedrigeren, zweiten festgelegten Wert festzulegen, wobei der genannte zweite Wert zur Stromversorgung der elektronischen Verarbeitungsschaltung (2) über den Stromversorgungskondensator (C) ausreicht.

2. Auslöser nach Anspruch 1, **dadurch gekennzeichnet, daß** der zweite Wert der Bezugsspannung (Vref) kleiner ist als die zur Aktivierung einer Auslösespule (4) des Auslösers erforderliche Spannung.

3. Auslöser nach einem der Ansprüche 1 und 2, **dadurch gekennzeichnet, daß** die Regelschaltung (11) einen Eingang umfaßt, der mit einem Ausgang der elektronischen Verarbeitungsschaltung (2) verbunden ist.

4. Auslöser nach irgendeinem der Ansprüche 1 bis 3, **dadurch gekennzeichnet, daß** die festgelegte Zeitspanne zwischen 10 und 100 Millisekunden beträgt.

5. Auslöser nach irgendeinem der Ansprüche 1 bis 4, **dadurch gekennzeichnet, daß** die Stromversorgungsschaltung (5) als Schaltnetzteil ausgebildet ist.
